# EUROPEAN PATENT APPLICATION

(11) **EP 4 249 364 A1**
(43) Date of publication of application: **27.09.2023**
(21) Application number: 21915244.4
(22) Date of filing: 24.12.2021
(51) Int. Cl.: B63B 25/08, B63B 25/16, B63B 27/24, F17D 5/00, F16L 3/00, F16L 55/00

(54) **PIPEWORK STRUCTURE FOR EXTREMELY LOW-TEMPERATURE LIQUID, AND WATERCRAFT PROVIDED THEREWITH**

(30) Priority: 28.12.2020 JP 2020218810
(71) Applicant: KAWASAKI JUKOGYO KABUSHIKI KAISHA, Kobe-shi, Hyogo 650-8670 (JP)
(72) Inventor: TANIMOTO, Keisuke, Kobe-shi, Hyogo 650-8670 (JP); SHIMOGAKI, Takashi, Kobe-shi, Hyogo 650-8670 (JP)
(74) Representative: Arnold & Siedsma
(86) International application number: PCT/JP2021/048301
(87) International publication number: WO 2022/145384

(57) **Abstract**

A cryogenic liquid pipe structure is for use in a vessel that stores a cryogenic liquid having a boiling point of -196°C or lower under a normal pressure. The pipe structure includes: a low-temperature pipe (10) arranged above and away from a structural member (4) of a vessel (1) and extending along the structural member (4) for allowing the cryogenic liquid to flow; and a porous heat dissipation layer (20) that lies below the low-temperature pipe (10) to cover the structural member (4), receives a drop of liquefied air from a surface of the low-temperature pipe (10), and allows the drop of liquefied air to evaporate.

## Description

### Technical Field

The present disclosure relates to a cryogenic liquid pipe structure for use in a vessel that stores a cryogenic liquid having a boiling point of -196°C or lower under a normal pressure, and relates to a vessel.

### Background Art

Patent Literature 1 below has been known as describing a pipe for allowing such a cryogenic liquid as described above to flow therethrough. Specifically, the pipe in Patent Literature 1 has a double structure, i.e., is a double pipe, for allowing liquefied hydrogen having a boiling point of -253°C under a normal pressure to flow therethrough, and the pipe includes an inner pipe and an outer pipe concentrically arranged. The inner pipe and the outer pipe define therebetween a vacuumed layer for blocking heat transfer. Heat insulation by the vacuumed layer maintains the liquefied hydrogen in the inner pipe at a temperature equal to or lower than the boiling point thereof.

A decrease in a vacuum degree of the heat insulative layer in the double pipe for liquefied hydrogen in Patent Literature 1 causes heat transfer between the inner pipe and the outer pipe, resulting in a smaller difference between a temperature of the outer pipe and a temperature of the inner pipe. When the temperature of the outer pipe decreases to reach a value around the temperature of the liquefied hydrogen in the inner pipe, air is likely to be condensed on the surface of the outer pipe.

Liquefied air containing liquefied nitrogen or liquefied oxygen may come into existence on the surface of the outer pipe, and, in such a case, a drop of the liquefied air flows on the surface of the outer pipe and falls down to a structural member located below the double pipe and constituting a vessel body of a vessel. In this case, the structural member is notably cooled by the liquefied air. The structural member is normally made of general structural soft steel, and thus has a possibility of triggering low-temperature embrittlement attributed to the decrease in the temperature when cooled by the liquefied air.

### Citation List

### Patent Literature

Patent Literature 1: Japanese Unexamined Patent Publication No. 2017-20914

### Summary of Invention

This disclosure has been achieved in consideration of the circumstances described above, and an object of the disclosure is to provide a cryogenic liquid pipe structure that enables suppression of embrittlement of a structural member of a vessel attributed to a drop of liquefied air from a surface of a pipe for allowing a cryogenic liquid to flow therethrough, the liquefied air coming into existence on the surface in accordance with a decrease in a temperature of the pipe, and to provide a vessel.

A cryogenic liquid pipe structure according to one aspect of the present disclosure is for use in a vessel that stores a cryogenic liquid having a boiling point of -196°C or lower under a normal pressure. The cryogenic liquid pipe structure includes: a low-temperature pipe arranged above and away from a structural member of the vessel and extending along the structural member for allowing the cryogenic liquid to flow therethrough; and a porous heat dissipation layer that lies below the low-temperature pipe to cover the structural member, receives a drop of liquefied air from a surface of the low-temperature pipe, and allows the drop of liquefied air to evaporate.

A vessel according to another aspect of the disclosure stores a cryogenic liquid having a boiling point of -196°C or lower under a normal pressure. The vessel includes: a vessel body having a predetermined structural member; and the above-described cryogenic liquid pipe structure.

### Brief Description of Drawings

Fig. 1 is a side view of a schematic structure of a vessel adopting a cryogenic liquid pipe structure according to an embodiment of this disclosure.
Fig. 2 is a cross-sectional view taken along the line II-II in Fig. 1.
Fig. 3 is a cross-sectional perspective view of a structure of a hydrogen pipe.
Fig. 4 is a side view of the cryogenic liquid pipe structure.
Fig. 5 is a cross-sectional view taken along the line V-V in Fig. 4.

### Description of Embodiments

Hereinafter, a cryogenic liquid pipe structure and a vessel that stores and carries a cryogenic liquid according to an embodiment of this disclosure will be described with reference to the accompanying drawings.

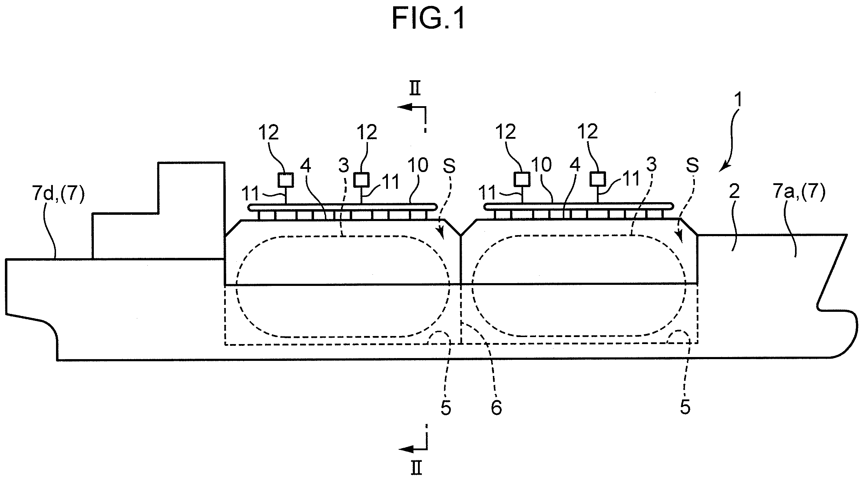

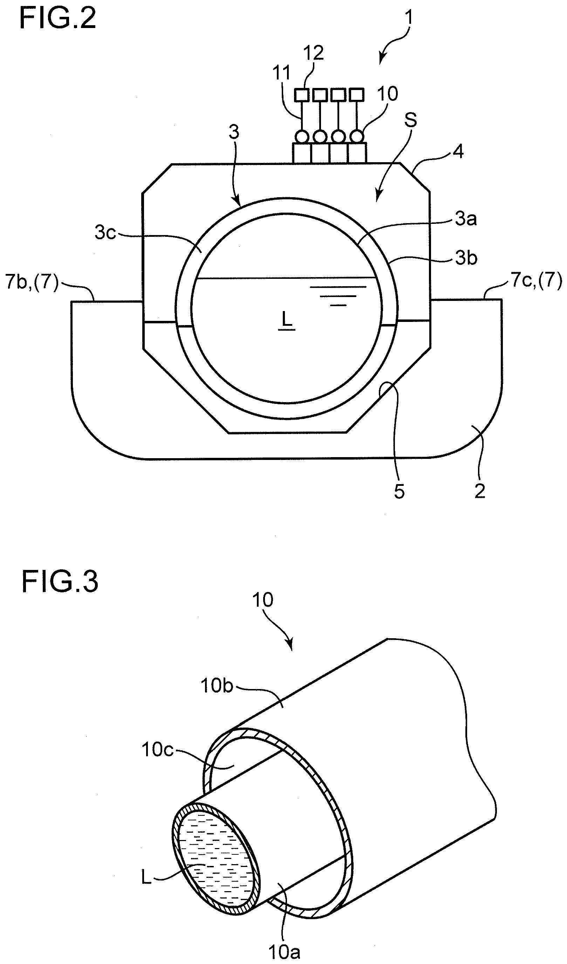

Fig. 1 is a side view of a schematic structure of a vessel adopting a cryogenic liquid pipe structure according to an embodiment of this disclosure, and Fig. 2 is a cross-sectional view of the schematic structure of the vessel. A vessel 1 illustrated in the drawings is a liquefied hydrogen carrier that stores and carries liquefied hydrogen L (Fig. 2), and the vessel includes a vessel body 2 and tanks 3 mounted in the vessel body 2. The liquefied hydrogen L to be stored and carried by the vessel 1 indicates hydrogen in a liquid state cooled to a temperature equal to or lower than a boiling point of -253°C under a normal pressure, and corresponds to an example of the cryogenic liquid in this disclosure.

The vessel body 2 includes cargo holds 5 opening upward in its regions respectively for the tanks 3. A bulkhead 6 is located between adjacent cargo holds 5 to separate the cargo holds 5 from each other.

The vessel body 2 further includes a deck 7 surrounding the cargo holds 5. The deck 7 has a forecastle 7a located in front of the cargo holds 5, a pair of side decks 7b, 7c respectively located to the left and the right of the cargo holds 5, and a stern deck 7d located in the rear of the cargo holds 5. The vessel body 2 is made of steel material except for low-temperature steel. For instance, each of the deck members 7a to 7d is made of general structural soft steel. Although a kind of the structural soft steel is not particularly limited, an SS member (rolled steel member for general structure) defined in the JIS standard is adoptable as an example.

Each of the tanks 3 has a long cylindrical shape extending in a vessel longitudinal direction of the vessel 1, and each tank 3 is accommodated in the corresponding cargo hold 5. The tank 3 has an inner tank 3a for storing the liquefied hydrogen L inside and an outer tank 3b arranged concentrically with the inner tank 3a outside the inner tank 3a. The inner tank 3a and the outer tank 3b define therebetween a vacuumed layer 3c for heat insulation. The vacuumed layer 3c is an enclosed space communicable with an unillustrated suction device.

Tank covers 4 are arranged over the tanks 3 respectively. Each tank cover 4 constitutes a part of the vessel body 2, and defines an accommodation space S for each tank 3 in cooperation with the corresponding cargo hold 5. The tank cover 4 is made of steel material except for low-temperature steel in the same manner as the vessel body 2. For instance, the tank cover 4 is made of general structural soft steel, such as the aforementioned SS member. In other words, the tank cover 4 is made of steel material which is more likely to trigger low-temperature embrittlement than low-temperature steel under a cryogenic condition.

The tank cover 4 has a top surface above which a hydrogen pipe 10 is arranged. The hydrogen pipe 10 is used to at least unload the liquefied hydrogen L in the tank 3 from the vessel 1 and allows the liquefied hydrogen L to flow therethrough. The hydrogen pipe 10 is arranged above and away from the top surface of the tank cover 4 and extends along the top surface of the tank cover 4 while appropriately curving. The hydrogen pipe 10 corresponds to an example of the low-temperature pipe in the disclosure. The tank cover 4 located below the hydrogen pipe 10 corresponds to an example of the structural member of the vessel in the disclosure.

Fig. 3 is a cross-sectional perspective view of a structure of the hydrogen pipe 10. As illustrated in the drawing, the hydrogen pipe 10 is a multi-layered pipe including: an inner pipe 10a that allows the liquefied hydrogen L to flow therethrough; an outer pipe 10b that is arranged concentrically with the inner pipe 10a outside the inner pipe 10a; and a vacuumed layer 10c defined between the inner pipe 10a and the outer pipe 10b for heat insulation. The vacuumed layer 10c is an enclosed space communicable with a suction device 12 via a suction port 11 illustrated in Figs. 1 and 2.

In the embodiment, at least the inner pipe 10a in the hydrogen pipe 10 is made of low-temperature steel having a property less likely to trigger embrittlement even under a cryogenic condition.

In the embodiment, the outer pipe 10b is made of low-temperature steel. The material of the outer pipe 10b is not necessarily limited to the low-temperature steel, and various kinds of metals and resins are adoptable.

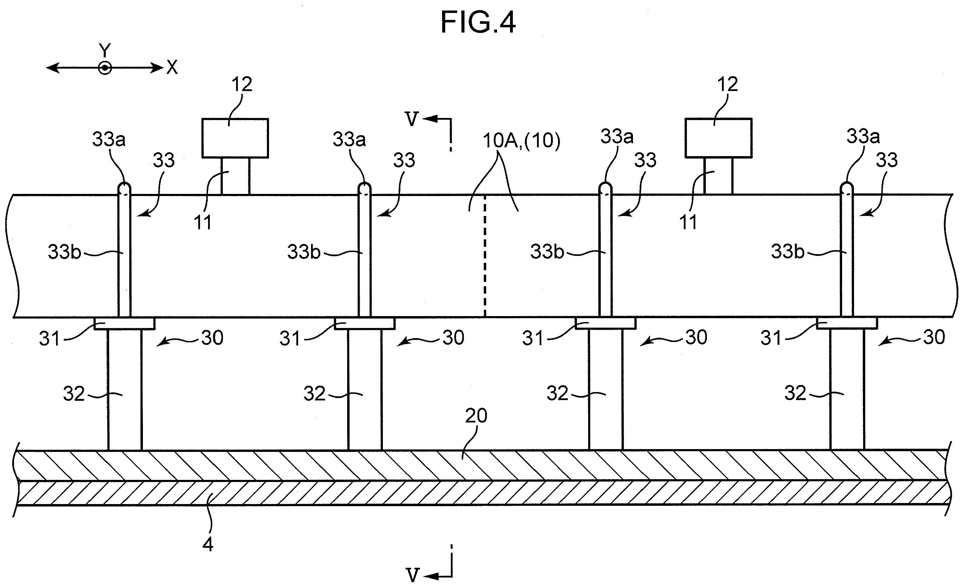

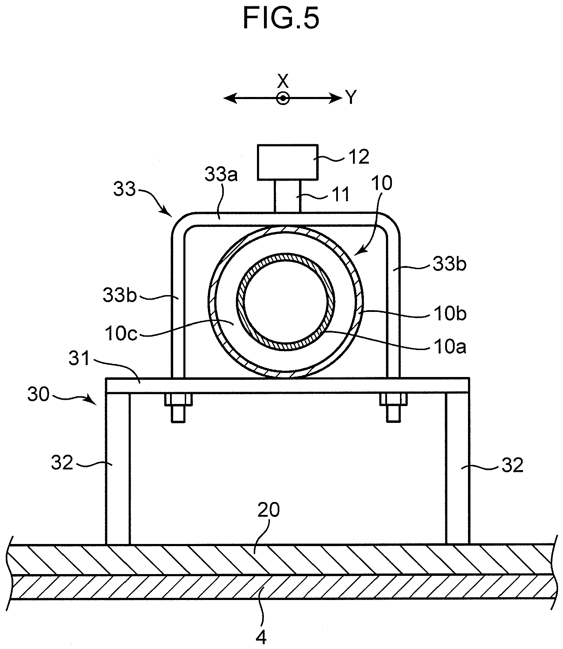

Fig. 4 is a side view of the cryogenic liquid pipe structure according to the embodiment of this disclosure, and Fig. 5 is a cross-sectional view of the cryogenic liquid pipe structure. The cross-sectional view of Fig. 5 omits illustration of the liquefied hydrogen (see Fig. 3) inside the inner pipe 10a. In the description below, a direction parallel to a central axis of the hydrogen pipe 10 is referred to as a pipe axial direction X, and a direction perpendicularly intersecting the pipe axial direction X and an up-down direction (vertical direction) is referred to as a pipe axis-perpendicular direction Y.

The cryogenic liquid pipe structure is a pipe structure for use in the vessel 1 that stores and carries the liquefied hydrogen L being a cryogenic liquid, and the cryogenic liquid pipe structure includes a heat dissipation layer 20 and support members 30 in addition to the hydrogen pipe 10.

As shown in Fig. 4, the hydrogen pipe 10 has a structure including unit pipes 10A each having a predetermined length and connected to each other in the pipe axial direction X. In the hydrogen pipe 10, the unit pipes 10A are respectively connected to corresponding suction devices 12 for evacuation and maintaining of a vacuumed state in the vacuumed layer 10c via corresponding suction ports 11. That is to say, vacuuming by each suction device 12 for the vacuumed layer 10c in the hydrogen pipe 10 is not executed over an entire length of the hydrogen pipe 10, but is executed individually for each unit pipe 10A. This enables the vacuumed layer 10c in the hydrogen pipe 10 to rapidly have a predetermined vacuum degree. Further, in an occurrence of a decrease in the vacuum degree of the vacuumed layer 10c, the occurrence can be limited to a specific portion of the hydrogen pipe 10 without progressing therefrom.

The heat dissipation layer 20 is a porous layer having pores therein and lying below the hydrogen pipe 10 to cover the top surface of the tank cover 4. The heat dissipation layer 20 extends entirely over a region on the top surface of the tank cover 4 above which the hydrogen pipe 10 is arranged. The heat dissipation layer 20 is made of one material or two or more materials selected from asphalt, concrete, and mortar. The heat dissipation layer 20 receives a drop of liquefied air resulting from nitrogen or oxygen condensed in air, and coming into existence on a surface of the outer pipe 10b in accordance with a decrease in a temperature of the outer pipe 10b of the hydrogen pipe 10, and the heat dissipation layer allows the drop of the liquefied air to evaporate.

The support members 30 are arranged in the pipe axial direction X on the top surface of the tank cover 4. Each of the support members 30 is in contact with the hydrogen pipe 10 and supports the hydrogen pipe 10 above and away from the tank cover 4. Each of the support members 30 has a base 31, a pair of legs 32, and a fastener 33.

The base 31 is a plate-shaped member extending in the pipe axis-perpendicular direction Y just under the hydrogen pipe 10. The hydrogen pipe 10 is fixed to a top surface of the base 31 by the fastener 33. In other words, the base 31 is in contact with a lower surface of the hydrogen pipe 10 and directly supports the hydrogen pipe 10. Specifically, the base 31 is in contact with a lower surface of the outer pipe 10b and supports the outer pipe 10b.

The fastener 33 is a fastening member having an inverted U-shape in a front view. Specifically, the fastener 33 has an upper part 33a extending in the pipe axis-perpendicular direction Y, and a pair of side parts 33b extending downward from the opposite ends of the upper part 33a. The two side parts 33b are fastened from above to the base 31 respectively at left and right positions of the hydrogen pipe 10. In this manner, the upper part 33a and the base 31 sandwich the hydrogen pipe 10 therebetween to fix the hydrogen pipe 10 to the support member 30. A lubricating member or a low frictional member may be arranged between the outer pipe 10b and the base 31 to permit the outer pipe 10b and the base 31 to shift relative to each other due to, for example, thermal contraction.

The two legs 32 respectively extend downward from right and left ends of the base 31, that is, from the opposite ends of the base 31 in the pipe axis-perpendicular direction Y. Each of the legs 32 has a lower end fixed to the top surface of the tank cover 4 via the heat dissipation layer 20.

The support member 30 is made of low-temperature steel having a property less likely to trigger embrittlement even under a cryogenic condition. For instance, each of the components constituting the support member 30, i.e., the base 31, the legs 32, and the fastener 33, can be made of austenite stainless steel which is a kind of low-temperature steel. Favorable examples of the austenite stainless steel particularly include low carbon stainless steel defined in the JIS standard, such as SUS304L and SUS316L. It is a matter of course that aluminum alloy or other material being low-temperature steel is adoptable in place of the austenite stainless steel.

As described heretofore, in the embodiment, the porous heat dissipation layer 20 lies below the hydrogen pipe 10, which allows the liquefied hydrogen L to flow therethrough, to cover the tank cover 4, and the hydrogen pipe 10 is supported via the support member 30 made of low-temperature steel. This configuration is advantageous to suppression of embrittlement of the tank cover 4 attributed to a drop of liquefied air from the surface of the hydrogen pipe 10, the liquefied air coming into existence on the surface in accordance with a decrease in the temperature of the hydrogen pipe 10.

The hydrogen pipe 10 has a double structure including the inner pipe 10a, the outer pipe 10b, and the vacuumed layer 10c defined between the inner and outer pipes 10a, 10b. Hence, the temperature of the outer pipe 10b is maintained at a sufficiently higher value than a value of the temperature of the inner pipe 10a even when the liquefied hydrogen L flows into the inner pipe 10a as long as the vacuum degree of the vacuumed layer 10c is satisfactory. However, the vacuum degree of the vacuumed layer 10c may decrease because of long running of the vessel 1. An occurrence of such a decrease in the vacuum degree induces heat transfer between the inner pipe 10a and the outer pipe 10b, and thus reduces a temperature difference between the outer pipe 10b and the inner pipe 10a. In an extreme example, the temperature of the outer pipe 10b may decrease to a value around -253°C or lower being the temperature of the liquefied hydrogen in the inner pipe 10a.

It is noted here that the hydrogen pipe 10 has the structure including the unit pipes 10A connected to each other, and the vacuum degree of the vacuumed layer 10c is maintained individually for each of the unit pipes 10A as described above. In this configuration, the vacuum degree of the vacuumed layer 10c does not uniformly decrease over the entire length of the hydrogen pipe 10, and a decrease rate of the vacuum degree may vary depending on each unit pipe 10A. It is seen from this perspective that an occurrence of a decrease in the temperature of the outer pipe 10b to a value around the temperature of the liquefied hydrogen L is normally limited to a certain portion of the hydrogen pipe 10. Under the circumstances, such a portion as a portion of the hydrogen pipe 10 having a surface temperature decreased to a value around the temperature of the liquefied hydrogen L is particularly referred to as "temperature decreasing portion".

When the hydrogen pipe 10 has a temperature decreasing portion, a crew of the vessel 1 repairs a specific unit pipe 10A corresponding to the temperature decreasing portion, or replaces the unit pipe with a new unit pipe 10A. However, nitrogen or oxygen contained in air may be condensed and liquefied air may come into existence on the surface of the outer pipe 10b at the temperature decreasing portion of the hydrogen pipe 10 before completion of these operations. A drop of the liquefied air then flows on the surface of the outer pipe 10b and falls down to the tank cover 4 located below the temperature decreasing portion, and the tank cover 4 is notably cooled by the liquefied air. The tank cover 4 is normally made of general structural soft steel, and thus may trigger low-temperature embrittlement attributed to the temperature decrease when cooled by the liquefied air.

In the embodiment, the porous heat dissipation layer 20 is provided below the hydrogen pipe 10 to cover the tank cover 4 in consideration of this problem. The heat dissipation layer 20 can reliably receive the drop of the liquefied air from the hydrogen pipe 10, and further allows the liquefied air having been received to rapidly evaporate owing to the temperature of the heat dissipation layer 20. The heat dissipation layer 20 is porous and has a large surface area, and thus facilitates the evaporation of the liquefied air having been received. This keeps the liquefied air from reaching the tank cover 4 and notably cooling the tank cover 4, and thus results in achieving appropriate protection of the tank cover 4 from low-temperature embrittlement.

The heat dissipation layer 20 is further made of one material or two or more materials selected from asphalt, concrete, and mortar. For instance, the heat dissipation layer 20 may be in the form of a single asphalt layer, or may be in the form of a laminate of an asphalt layer and a concrete layer. Each of the asphalt, the concrete, and the mortar has characteristics less likely to trigger low-temperature embrittlement. This attains suppression of low-temperature embrittlement of the heat dissipation layer 20 attributed to a drop of liquefied air from the hydrogen pipe 10 to the heat dissipation layer 20. Moreover, use of the aforementioned materials leads to easy and inexpensive formation of the porous heat dissipation layer 20 on the top surface of the tank cover 4.

The heat dissipation layer 20 further extends entirely over the region on the top surface of the tank cover 4 above which the hydrogen pipe 10 is arranged. This arrangement allows the heat dissipation layer 20 to reliably receive a drop of liquefied air from each temperature decreasing portion even when the pipe arrangement is complicated resulting from the hydrogen pipe 10 extending while appropriately curving above the tank cover 4 or the temperature drastically decreases in many portions of the hydrogen pipe 10.

In the temperature decreasing portion of the hydrogen pipe 10, the temperature of the outer pipe 10b decreases to a value around the temperature of the liquefied hydrogen L. If the temperature decreasing portion is provided with the support member 30, the support member 30 would be notably cooled through thermal conduction with the temperature decreasing portion. In particular, the base 31 and the fastener 33 of the support member 30, each being in contact with the hydrogen pipe 10, are notably cooled. If the support member 30 is made of general structural soft steel in the same manner as the tank cover 4, the support member 30 would be likely to embrittle due to low-temperature embrittlement and fail to reliably support the hydrogen pipe 10. Considering the foregoing, the embodiment adopts low-temperature steel having a property less likely to trigger embrittlement even under a cryogenic condition for the support member 30. This configuration hence attains satisfactory suppression of low-temperature embrittlement of the support member 30 even when the support member 30 is notably cooled, and enables the support member 30 to favorably maintain enough strength to support the hydrogen pipe 10.

Heretofore, although the cryogenic liquid pipe structure and the vessel according to the embodiment of this disclosure are described, the disclosure is not limited thereto and may adopt the following modified embodiments.

Although the embodiment exemplifies the structure where the heat dissipation layer 20 extends entirely over the region on the top surface of the tank cover 4 above which the hydrogen pipe 10 is arranged, the disclosure is not limited to this structure. For instance, the heat dissipation layer 20 may extend, on the top surface of the tank cover 4, over an entire length of the hydrogen pipe 10 in the pipe axial direction X of the hydrogen pipe 10. Alternatively, the heat dissipation layer 20 may be provided limitedly below a specific portion of the hydrogen pipe 10 where a vacuum degree of the vacuumed layer 10c is estimated in advance to particularly easily decrease.

Although the embodiment exemplifies the structure where the hydrogen pipe 10 is arranged above the tank cover 4 in the vessel 1, the hydrogen pipe 10 may be arranged above the deck 7 or may be arranged in a cargo hold chamber, as well as above the tank cover 4. Even in the arrangement of the hydrogen pipe in a place other than the place above the tank cover 4 as described above, the heat dissipation layer 20 is providable in the place other than the place above the tank cover 4 with application of the support structure by the support member 30 in the same manner as the embodiment.

Although the double pipe including the inner pipe 10a, the outer pipe 10b, and the vacuumed layer 10c defined between the inner and outer pipes 10a, 10b is adopted as the hydrogen pipe 10 in the embodiment, a pipe in a no-double structure without a vacuumed layer is adoptable as the low-temperature pipe. For instance, a pipe including: a main pipe made of low-temperature steel; and a heat insulative layer, such as a urethane layer, on an outer surface of the main pipe is adoptable as the low-temperature pipe.

The described embodiment exemplifies application of the pipe structure in the disclosure to the vessel 1 that stores and carries the liquefied hydrogen L having the boiling point of -253°C under a normal pressure, but the disclosure is not limited thereto. The pipe structure in the disclosure is applicable to any vessel that stores a cryogenic liquid having a boiling point of -196°C or lower under a normal pressure, and thus various kinds of vessel can adopt the pipe structure in this disclosure to that extent. For instance, the pipe structure in the disclosure is applicable to a vessel that stores liquefied helium having a boiling point of -269°C under a normal pressure or liquefied nitrogen having a boiling point of -196°C under the normal pressure.

The embodiment and modifications described heretofore include the following aspects.

A cryogenic liquid pipe structure according to one aspect of the present disclosure is for use in a vessel that stores a cryogenic liquid having a boiling point of -196°C or lower under a normal pressure. The cryogenic liquid pipe structure includes: a low-temperature pipe arranged above and away from a structural member of the vessel and extending along the structural member for allowing the cryogenic liquid to flow therethrough; and a porous heat dissipation layer that lies below the low-temperature pipe to cover the structural member, receives a drop of liquefied air from a surface of the low-temperature pipe, and allows the drop of liquefied air to evaporate.

The low-temperature pipe that allows the cryogenic liquid having the boiling point of -196°C or lower under the normal pressure to flow therethrough has a possibility that a surface temperature of at least a portion of the pipe decreases to a value around the temperature of the cryogenic liquid. Nitrogen or oxygen in air may be condensed and liquefied air may come into existence on a surface of the temperature decreasing portion of the low-temperature pipe where the temperature drastically decreases. A drop of the liquefied air flows on the surface of the low-temperature pipe and falls down to the structural member of the vessel located below the low-temperature pipe, and the structural member is notably cooled by the liquefied air. The structural member of the vessel is normally made of general structural soft steel, and thus may trigger low-temperature embrittlement attributed to the temperature decrease when cooled by the liquefied air. In the disclosure, the porous heat dissipation layer is provided below the low-temperature pipe to cover the structural member in consideration of the problem. The heat dissipation layer thus can reliably receive the drop of the liquefied air from the low-temperature pipe, and further allows the drop of liquefied air to evaporate. This configuration prevents the liquefied air from reaching the structural member of the vessel with a sufficiently high probability, and achieves appropriate protection of the structural member from low-temperature embrittlement.

In the cryogenic liquid pipe structure, the heat dissipation layer may be made of one material or two or more materials selected from asphalt, concrete, and mortar.

Each of the asphalt, the concrete, and the mortar has characteristics less likely to trigger low-temperature embrittlement. This attains suppression of low-temperature embrittlement of the heat dissipation layer attributed to the drop of the liquefied air from the low-temperature pipe to the heat dissipation layer. Moreover, use of the aforementioned materials leads to easy and inexpensive formation of the porous heat dissipation layer on the structural member of the vessel.

In the cryogenic liquid pipe structure, the heat dissipation layer may extend entirely over a region of the structural member above which the low-temperature pipe is arranged.

In this aspect, the heat dissipation layer can reliably receive a drop of liquefied air from each temperature decreasing portion even when the pipe arrangement is complicated resulting from the low-temperature pipe extending while appropriately curving above the structural member or the temperature drastically decreases in many portions of the low-temperature pipe.

The cryogenic liquid pipe structure may further include a support member that is in contact with the low-temperature pipe and supports the low-temperature pipe above and away from the structural member. The support member may be made of low-temperature steel which is less likely to trigger low-temperature embrittlement than the structural member.

In an occurrence of a drastic decrease in the temperature of the low-temperature pipe, the support member that supports the low-temperature pipe is notably cooled through thermal conduction with the low-temperature pipe. In this case, if the support member is made of the same material as that of the structural member of the vessel, the support member would be likely to embrittle due to the low-temperature embrittlement and may fail to reliably support the low-temperature pipe. Considering the foregoing, the support member is made of low-temperature steel having a property less likely to trigger low-temperature embrittlement than the property of the structural member. This configuration hence attains satisfactory suppression of low-temperature embrittlement of the support member even when the support member is notably cooled, and enables the support member to favorably maintain enough strength to support the low-temperature pipe.

A vessel according to another aspect of the disclosure stores a cryogenic liquid having a boiling point of -196°C or lower under a normal pressure. The vessel includes: a vessel body having a predetermined structural member; and the above-described cryogenic liquid pipe structure.

This vessel achieves protection of the structural member constituting the vessel body from low-temperature embrittlement.

## Claims

1. A cryogenic liquid pipe structure for use in a vessel that stores a cryogenic liquid having a boiling point of -196°C or lower under a normal pressure, the cryogenic liquid pipe structure comprising:
a low-temperature pipe arranged above and away from a structural member of the vessel and extending along the structural member for allowing the cryogenic liquid to flow therethrough; and
a porous heat dissipation layer that lies below the low-temperature pipe to cover the structural member, receives a drop of liquefied air from a surface of the low-temperature pipe, and allows the drop of liquefied air to evaporate.

2. The cryogenic liquid pipe structure according to claim 1, wherein the heat dissipation layer is made of one material or two or more materials selected from asphalt, concrete, and mortar.

3. The cryogenic liquid pipe structure according to claim 1 or 2, wherein the heat dissipation layer extends entirely over a region of the structural member above which the low-temperature pipe is arranged.

4. The cryogenic liquid pipe structure according to any one of claims 1 to 3, further comprising a support member that is in contact with the low-temperature pipe and supports the low-temperature pipe above and away from the structural member, wherein
the support member is made of low-temperature steel which is less likely to trigger low-temperature embrittlement than the structural member.

5. A vessel that stores a cryogenic liquid having a boiling point of -196°C or lower under a normal pressure, the vessel comprising:
a vessel body having a predetermined structural member; and
the cryogenic liquid pipe structure according to any one of claims 1 to 4.
